# EUROPÄISCHE PATENTSCHRIFT

(11) **EP 1 251 736 B1**
(45) Veröffentlichungstag und Bekanntmachung des Hinweises auf die Patenterteilung: **09.02.2005**
(21) Anmeldenummer: 00991203.1
(22) Anmeldetag: 16.12.2000
(51) Int. Cl.: A01N 25/30

(54) **TENSID/LÖSUNGSMITTEL-SYSTEME**
TENSIDE/SOLVENT SYSTEMS
SYSTEMES TENSIOACTIF/SOLVANT

(30) Priorität: 28.12.1999 DE 19963381
(43) Veröffentlichungstag der Anmeldung: 30.10.2002
(73) Patentinhaber: Bayer CropScience GmbH, 65929 Frankfurt/Main (DE)
(72) Erfinder: WÜRTZ, Jochen, 55411 Bingen am Rhein (DE); SCHNABEL, Gerhard, 63820 Elsenfeld (DE); FRISCH, Gerhard, 61273 Wehrheim (DE)
(86) Internationale Anmeldenummer: PCT/EP2000/012836
(87) Internationale Veröffentlichungsnummer: WO 2001/047356

(56) Entgegenhaltungen:
- EP-A- 0 328 217
- WO-A-00/56146
- FR-A- 2 433 908
- FR-A- 2 599 593
- US-A- 5 013 747
- US-A- 5 869 423

## Beschreibung

Die Erfindung betrifft das Gebiet der Kombinationen aus Tensiden und Lösungsmitteln (Tensid/Lösungsmittel-Systeme) für flüssige Formulierungen von Wirkstoffen (auch flüssige Zubereitungen genannt), insbesondere von agrochemischen Wirkstoffen. Die Erfindung betrifft dabei bevorzugt Tensid/Lösungsmittel-Systeme für Einphasen-Formulierungen von einem oder mehreren agrochemischen Wirkstoffen, wobei mindestens einer der Wirkstoffe, vorzugsweise jeder Wirkstoff, in Wasser nicht gut löslich ist. Insbesondere betrifft die Erfindung Emulsionskonzentrate (engl.: "emulsifyable concentrates", EC) auf Basis organischer Lösungsmittel und agrochemischer Wirkstoffe unterschiedlicher Polarität. Formulierungen in Form von Emulsionen oder Suspensionskonzentraten auf Ölbasis sind auch möglich, bevorzugt sind Emulsionskonzentrate, die einen oder mehrere agrochemische Wirkstoffe aus der Gruppe der Herbizide, Insektizide, Fungizide, Acaricide, Molluscicide, Rodenticide und /oder Holzschutzmittel enthalten. Dabei sind unter anderem Rübenherbizide wie Desmedipham, Phenmedipham, Ethofumesat, Metamitron und Herbizide physikalischanwendungstechnisch ähnlichen Typs, beispielsweise Herbizide aus der Reihe der Phenoxyphenoxypropionate oder der Heteroaryloxyphenoxypropionate bevorzugt.

Im allgemeinen werden Wirkstoffe nicht als Reinstoffe, sondern je nach Anwendungsgebiet und gewünschter physikalischer Beschaffenheit der Anwendungsform in Kombination mit bestimmten Hilfsstoffen eingesetzt, d. h. sie werden "formuliert". Häufig enthalten derartige Formulierungen anstelle von Einzelwirkstoffen Kombinationen verschiedener Wirkstoffe, um die Eigenschaften der Einzelwirkstoffe bei der Anwendung gemeinsam zu nutzen oder auch weil die Einzelwirkstoffe in der Kombination synergistisch sind, d. h. überadditive Wirkungssteigerungen ergeben.

Unabhängig vom Formulierungstyp sowie davon, ob die Formulierungen einen oder mehrere Wirkstoffe enthalten, ist man insbesondere im landwirtschaftlichen Bereich bestrebt, eine möglichst hohe Wirkstoffkonzentration ("Beladung") der jeweiligen Formulierung zu erreichen, da eine hohe Konzentration der Wirkstoffe eine Reduktion der auszubringenden Volumina ermöglicht und folglich Materialeinsparungen im Bereich der ausgebrachten Hilfsstoffe, sowie Einsparungen im Verpackungs- und Logistik-Bereich nach sich zieht.
Daher sind hochkonzentrierte stabile Formulierungen und Coformulierungen mit umweltfreundlichen Hilfsstoffen von grundsätzlichem Interesse.

Prinzipiell können Wirkstoffe auf unterschiedliche Art formuliert werden, je nachdem welche biologischen und/oder chemisch-physikalischen Parameter vorgegeben sind. Allgemein kommen als Formulierungsmöglichkeiten dafür beispielsweise in Betracht: Spritzpulver (WP), ÖI-in-Wasser- (O/W) bzw. Wasser-in-ÖI (W/O)-Emulsionen, Suspensionen (SC), Suspoemulsionen (SE), Emulsionskonzentrate (EC) oder auch Granulate zur Boden- oder Streuapplikation bzw. wasserdispergierbare Granulate (WG). Die genannten Formulierungstypen sind im Prinzip bekannt und werden z. B. beschrieben in: Winnacker-Küchler, "Chemische Technologie", Band 7, C.Hauser-Verlag, München, 4.Auflage 1986; van Valkenburg, "Pesticide Formulations", Marcel-Dekker N.Y., 1973; K.Martens, "Spray Drying Handbook", 3rd Ed., 1979, G.Goodwin Ltd. London.

Flüssigformulierungen von Herbiziden sind bereits bekannt. So werden beispielsweise in WO-A-85/01286 Flüssigformulierungen beschrieben, die Phenmedipham und/oder Metamitron enthalten. Als Lösungsmittel werden in diesem Zusammenhang Ester von Polyalkoholen, Ether, Ketone, in Wasser unlösliche Alkohole, (Poly-)Glykole und Öle pflanzlichen, aber auch mineralischen Ursprungs erwähnt, und als geeignete Emulgatoren nur allgemein nichtionogene, aber auch ampholytische, kationische oder anionische Tenside für die beschriebenen Flüssigformulierungen genannt.

Alternativ zu Emulsionskonzentraten auf Lösungsmittelbasis kommen für die oben genannten Wirkstoffe unter anderem Wasser enthaltende Suspensionskonzentrate (SC) bzw. Suspoemulsionen (SE) in Betracht. Derartige Formulierungen sind zum Beispiel in EP-A 0514769 , WO-A-95/23505, EP-A-0637910 und WO-A-92/09195 beschrieben.

In FR-A-2597720, FR-A-2599593 sowie in FR-A-904874 sind Emulsionskonzentrate beschrieben, die - in Abweichung von den oben zitierten Schriften - in Verbindung mit (mindestens) einem Herbizid vom Biscarbamat-Typ (insbesondere Phenmedipham oder Desmedipham) eine Lösungsmittelkombination aus Tributylphosphat und einem mit Wasser mischbaren Lösungsmittel wie insbesondere N-Methylpyrrolidon (NMP) enthalten.

Weiterhin beschreibt EP-A-0328217 emulgierbare Konzentrate, die Ethofumesat und als Lösungsmittel Tributylphosphat enthalten. Nachteilig bei letzterem Formulierungtyp ist die Verwendung von Tributylphosphat, weil es als gefährliche Chemikalie gilt (vgl. z. B. Chemikaliengesetz). Dadurch ist zwar die Verwendung von Tributylphosphat nicht unmöglich oder verboten, jedoch ist die Verwendung in der Regel mit Auflagen verbunden oder generell problematisiert.

Weiterhin ist bekannt, daß die biologische Aktivität mancher pestizider Wirkstoffe in einigen Fällen durch niedermolekulare organische Verbindungen gesteigert werden kann. So eignen sich gemäß BE-A-597284 Ester oder Teilester auf Basis der Orthophosphorsäure und Alkoholen auf Alkyl-, Aryl-, Alkylaryl-, Cycloalkyl- und/oder Heterocyclen-Basis zur Wirkungsverstärkung von Herbiziden, beispielsweise von herbiziden Phenylharnstoffderivaten wie Monuron, Azolen wie Amitrol, Triazinen wie Simazin und Propionsäurederivaten wie Dalapon. Die dabei als Hilfsmittel spezifisch beschriebenen Phosphorsäureester umfassen lediglich relativ unpolare oder ganz wasserlösliche Phosphorsäureester, die für die Herstellung von Emulsionskonzentraten nicht geeignet sind.

In DE-A-2914164 sind synergistische Wirkungen beschrieben, die bei Herbiziden mit desikkativer Wirkung an Kulturpflanzen, d. h. beispielsweise Herbiziden aus der Gruppe der Phenylharnstoffe (z. B. Metoxuron, Diuron) oder der Triazine (z. B. Atrazin, Simazin), auftreten, wenn sie mit Mitteln auf Phosphorbasis kombiniert werden, wie sie in der metallurgischen Industrie bei der Metallgewinnung oder als Weichmacher für Polymere eingesetzt werden. Aus der Druckschrift geht eindeutig hervor, dass diese Mittel auf Phosphorbasis, die beispielsweise in der metallurgischen Industrie zur Gewinnung von Metallen oder als Weichmacher bei Polymeren eingesetzt werden können, hier als Wirksubstanzen eingesetzt werden und nicht als Lösungsmittel. Mit anderen Worten bedeutet dies, dass es sich bei den Phosphorsäurederivaten in dieser Schrift um Wirksubstanzen handelt und nicht um Lösungsmittel oder Trägermedien für agrochemische Wirkstoffe im herkömmlichen Sinne. Auch der japanischen Patentschrift JA 29878/69 ist zu entnehmen, daß beispielsweise Tributoxyethylphosphat (TBEP) als Wirksubstanz, nicht aber als Lösungsmittel beschrieben wird.

Überraschenderweise wurde nun gefunden, daß bestimmte Tensid-Lösungsmittel-Systeme in besonderer Weise geeignet sind, für die Herstellung von flüssigen Formulierungen wie Öldispersionen,Suspoemulsionen, Emulsionen auf W/O- bzw. O/W-Basis und besonders von Emulsionskonzentraten und entsprechender davon abgeleiteter wäßriger Spritzbrühen eingesetzt zu werden.

Die vorliegende Erfindung betrifft somit eine Flüssige Wirkstoff-Formulierung, enthaltend
(a) einen oder mehrere in Wasser unlösliche oder bis 10 g/l in Wasser lösliche Wirkstoffe, ausgewählt aus der Gruppe der Biscarbamat-Herbizide, Sulfonat-Herbizide, Triazinonherbizide, Phenoxyphenoxypropionate, Heteroaryloxyphenoxy-propionate und Sulfonylharnstoffe,
(b) ein Tensid/Lösungsmittel-System, enthaltend
   α) ein oder mehrere Tenside auf nichtaromatischer Basis und
   β) als Lösungsmittel einen oder mehrere wasserunlösliche oder bis 10 g/l in Wasser lösliche Triester der Phosphorsäure mit Alkoholen, vorzugsweise aus der Gruppe bestehend aus
      1) einwertige Alkanole mit 5 bis 22 C-Atomen,
      2) Diole oder Polyole,
      3) Aryl-, Alkylaryl-, Poly(älkyl)aryl- und Poly(arylalkyl)arylalkohole,
      4) alkoxylierte Alkohole, die durch Umsetzung der vorstehend unter 1), 2) oder 3) genannten Alkohole mit Alkylenoxiden erhalten werden, und
      5) alkoxylierte Alkohole, die durch Umsetzung einwertiger Alkanole mit 1 bis 4 C-Atomen und Alkylenoxiden erhalten werden, und
      worin keine Tenside auf Aromatenbasis enthalten sind,
   (c) gegebenenfalls weitere organische Lösungsmittel und
   (d) gegebenenfalls,übliche Hilfs- und Zusatzstoffe wie weitere Tenside, Polymere, Düngemittel, Riechstoffe, Verdunstungshemmer, Verdickungsmittel, Farbstoffe, Frostschutz- und/oder Konservierungsmittel und
   (e) gegebenenfalls Wasser.

In den erfindungsgemäßen Tensid/Lösungsmittelsystemen enthaltene Tenside α) auf nichtaromatischer Basis, z.B. auf Heterocyclen-, Olefin-, Aliphaten- oder Cycloaliphatenbasis, sind beispielsweise oberflächenaktive mit einer oder mehreren Alkylgruppen substituierte und nachfolgend derivatisierte, z.B. alkoxylierte, Pyridin-, Pyrimidin-, Triazin-, Pyrol-, Pyrolidin-, Furan-, Thiophen-, Benzoxazol-, Benzthiazolund Triazolverbindungen, welche in der Lösungsmittelphase löslich sind und geeignet sind, diese - zusammen mit darin gelösten Wirkstoffen - bei Verdünnung mit Wasser (zur Spritzbrühe) emulgieren.

Beispiele für derartige Tenside α) sind nachfolgend aufgeführt, worin EO=Ethylenoxid-Einheiten, PO=Propylenoxid-Einheiten und BO=Butylenoxid-Einheiten bedeutet:
α.1) Fettalkohole mit 10 - 24 Kohlenstoffatomen mit 0-60 EO und/oder 0-20 PO und/oder 0-15 BO in beliebiger Reihenfolge. Die terminalen Hydroxygruppen dieser Verbindungen können durch einen Alkyl-,Cycloalkyl-oder Acylrest mit 1-24 Kohlenstoffatomen endgruppenverschlossen sein. Beispiele für derartige Verbindungen sind:
   Genapol®C-,L-,O-,T-,UD-,UDD-,X-Marken von Clariant, Plurafac®- und Lutensol®A-,AT-,ON-,TO-Marken von BASF, Marlipal®24- und 013 Marken von Condea, Dehypon®-Marken von Henkel, Ethylan®-Marken von Akzo-Nobel wie Ethylan CD 120.
α.2) Anionische Derivate der unter α.1) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol®LRO, Sandopan®-Marken, Hostaphat/Hordaphos®-Marken von Clariant.
   Copolymere bestehend aus EO,PO und/oder BO Einheiten wie zum Beispiel Blockcopolymere wie die Pluronic®-Marken von der BASF und die Synperonic®-Marken von Uniquema mit einem Molekulargewicht von 400 bis 10⁸.
   Alkylenoxydaddukte von C₁ - C₉ Alkoholen wie Atlox®5000 von Uniquema oder Hoe®-S3510 von Clariant.
   Anionische Derivate der unter α.3) und α.4) beschriebenen Produkte in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis).
α.3) Fettsäure- und Triglyceridalkoxylate wie die Serdox®NOG-Marken von Condea oder die Emulsogen®-Marken von Clariant, Salze von aliphatischen,cycloaliphatischen und olefinischen Carbonsäuren und Polycarbonsäuren, sowie Alpha-Sulfofettsäureester wie von Henkel erhältlich.
α.4) Fettsäureamidalkoxylate wie die Comperlan®-Marken von Henkel oder die Amam®-Marken von Rhodia.
   Alkylenoxydaddukte von Alkindiolen wie die Surfynol®-Marken von Air Products. Zuckerderivate wie Amino- und Amidozucker von Clariant,Glukitole von Clariant, Alkylpolyglycoside in Form der APG®-Marken von Henkel oder wie Sorbitanester in Form der Span®- oder Tween®-Marken von Uniquema oder Cyclodextrinester oder -ether von Wacker.
α.5) Oberflächenaktive Cellulose- und Algin-, Pektin- und Guarderivate wie die Tylose®-Marken von Clariant,die Manutex®-Marken von Kelco und Guarderivate von Cesalpina.
   Alkylenoxydaddukte auf Polyolbasis wie Polyglykol®-Marken von Clariant. Grenzflächenaktive Polyglyceride und deren Derivate von Clariant.
α.6) Sulfosuccinate , Alkansulfonate, Paraffin- und Olefinsulfonate wie Netzer IS®, Hoe®S1728, Hostapur®OS, Hostapur®SAS von Clariant, Triton®GR7ME und GR5 von Union Carbide, Empimin®-Marken von Albright und Wilson, Marlon®-PS65 von Condea.
α.7) Sulfosuccinamate wie die Aerosol®-Marken von Cytec oder die Empimin®-Marken von Albright und Wilson.
α.8) Alkylenoxidaddukte von Fettaminen, quartäre Ammonium-Verbindungen mit 8 bis 22 Kohlenstoffatomen (C₈-C₂₂) wie z.B. die Genamin®C,L,O,T-Marken von Clariant.
α.9) Oberflächenaktive, zwitterionische Verbindungen wie Tauride, Betaine und Sulfobetaine in Form von Tegotain®-Marken von Goldschmidt, Hostapon®Tund Arkopon®T-Marken von Clariant.
α.10) Oberflächenaktive Verbindungen auf Silikon- bzw Silanbasis wie die Tegopren®-Marken von Goldschmidt und die SE®-Marken von Wacker, sowie die Bevaloid®- ,Rhodorsil®- und Silcolapse®-Marken von Rhodia (Dow Corning, Reliance, GE, Bayer).
α.11) Per- oder polyfluorierte oberflächenaktive Verbindungen wie Fluowet®-Marken von Clariant, die Bayowet®-Marken von Bayer, die Zonyl®-Marken von DuPont und Produkte dieser Art von Daikin und Asahi Glass.
α.12) Grenzflächenaktive Sulfonamide z.B. von Bayer.
α.13) Grenzflächenaktive Polyacryl- und Polymethacrylderivate wie die Sokalan®-Marken von der BASF.
α.14) Oberflächenaktive Polyamide wie modifizierte Gelatine oder derivatisierte Polyasparginsäure von Bayer und deren Derivate.
α.15) Tensidische Polyvinylverbindungen wie modifiziertes PVP wie die Luviskol®-Marken von BASF und die Agrimer®-Marken von ISP oder die derivatisierten Polyvinylacetate wie die Mowilith®-Marken von Clariant oder die -butyrate wie die Lutonal®-Marken von der BASF,die Vinnapas®- und die Pioloform®-Marken von Wacker oder modifizierten Polyvinylalkohole wie die Mowiol®-Marken von Clariant.
α.16) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer®-VEMA-Marken von ISP.
α.17) Oberfächenaktive Derivate von Montan-, Polyethylen-, und Polypropylenwachsen wie die Hoechst®-wachse oder die Licowet®-Marken von Clariant.
α.18) Oberflächenaktive Phosphonate und Phosphinate wie Fluowet®-PL von Clariant.
α.19) Poly- oder perhalogenierte Tenside wie beispielsweise Emulsogen®-1557 von Clariant.

Die Lösungsmittelkomponente [Komponente (β)] des erfindungsgemäßen Tensid/Lösungsmittel-Systems sind wasserunlösliche oder bis maximal 10 g/l in Wasser lösliche, vollständig umgesetzte, nicht verseifte Ester, d.h. Triester, der Phosphorsäure, insbesondere der ortho-Phosphorsäure mit Alkoholen. Besonders bevorzugt eignen sich als Komponente (β) Verbindungen, die Alkylenoxideinheiten, z.B. (C₁-C₄)-Alkylenoxideinheiten aufweisen, z.B. Tri(butoxyethyl)phosphat (TBEP). Als Alkylenoxideinheiten sind (C₁-C₄)Alkylenoxideinheiten bevorzugt, z. B. Ethylenoxy-, Propylenoxy- und/oder Butylenoxyeinheiten, insbesondere Propylenoxy- und/oder Ethylenoxyeinheiten, die sich bevorzugt in der Alkoholkomponente des Phosphorsäureesters befinden. Bevorzugte Komponenten (β) weisen 1-4 Alkylenoxideinheiten, vorzugsweise 1 - 4 (C₁-C₄)Aklylenoxideinheiten pro Alkoholeinheit auf. Das Molekulargewicht der Komponente (β) ist vorzugsweise kleiner 1000. Die Verbindungen der Komponente (β) haben vorzugsweise das gemeinsame Merkmal, daß sie in wässriger Lösung keine - z.B. mit Lichtstreumessungen oder anderen Verfahren nachweisbaren - mizellaren Aggregate ausbilden. Dies grenzt sie zusätzlich von Phosphorsäureestertensiden ab.

Geeignete Komponenten (β) sind z.B. die Tri-Ester der formal dreifach mit Alkoholen umgesetzten Phosphorsäure, wie Orthophosphorsäure und die Oxalkylate der formal ein- und/oder zweifach mit Alkoholen umgesetzten Phosphorsäure, wie Orthophosphorsäure. Als Komponente (β) eignen sich dabei z.B. wasserunlösliche oder bis maximal 10 g/l in Wasser lösliche Tri-Ester der Phosphorsäure mit Alkoholen aus der Gruppe bestehend aus
1) einwertige Alkanole mit 5 bis 22 C-Atomen, z.B. n-, i- oder neo-Pentanol, n-Hexanol, n-Octanol, 2-Ethylhexanol,
2) Diole oder Polyole, wie Ethylenglykol, Propylenglykol oder Glycerin,
3) Aryl-, Alkylaryl-, Poly(alkyl)aryl- und Poly(arylalkyl)arylalkohole, beispielsweise Phenol und/oder Kresol, Octylphenol, Nonylphenol, Triisobutylphenol, Tristyrylphenol,
4) alkoxylierte Alkohole, die durch Umsetzung der vorstehend unter 1), 2) oder 3) genannten Alkohole mit Alkylenoxiden, vorzugsweise 1 - 4 Einheiten von (C₁-C₄)Alkylenoxiden, erhalten werden, und
5) alkoxylierte Alkohole, die durch Umsetzung einwertiger Alkanole mit 1 bis 4 C-Atomen und Alkylenoxiden, vorzugsweise 1- 4 Einheiten von (C₁-C₄) Alkylenoxiden, erhalten werden.

Bevorzugte Phosporsäureester (Komponente β) sind beispielsweise
- mit ortho-Phosphorsäure vollständig umgesetzte alkoxylierte kurzkettige Alkohole mit 1 bis 22 C-Atomen im Alkylrest und 1 bis 30, vorzugsweise 1 - 4 Alkylenoxideinheiten im Polyalkylenoxidteil, beispielsweise Tri(butoxyethyl)phosphat,
- mit ortho-Phosphorsäure vollständig umgesetzte Alkylalkohole mit 5 bis 22 C-Atomen, beispielsweise Hostaphat CG 120® (Clariant), Tri-n-Octylphosphat ("TOF", Bayer), sowie
- mit ortho-Phosphorsäure teilweise umgesetzte, gegebenenfalls alkoxylierte Alkohole mit 1 bis 22 C-Atomen im Alkylrest und Phenolderivate, jeweils mit 0 bis 30, vorzugsweise 0 - 4 Alkylenoxideinheiten im Polyalkylenoxidteil, wobei die verbleibenden OH-Valenzen der ortho-Phosphorsäure nachfolgend alkoxyliert wurden, beispielsweise das Reaktionsprodukt von Mono-/Dibutoxyethylphosphat und 2 mol Ethylenoxid bzw. 2 mol Propylenoxid.

Mit dem erfindungsgemäßen Tensid-/Lösungsmittelsystem lassen sich überraschenderweise stabile Wirkstofformulierungen, z.B. von in Wasser unlöslichen oder bis zu maximal 10 g/l in Wasser löslichen Wirkstoffen, insbesondere agrochemischen, z.B. herbiziden Wirkstoffen herstellen. Beispiele solcher Wirkstoff-Formulierungen sind optisch transparente, und thermodynamisch stabile Emulsionskonzentrate, thermodynamisch instabile O/W- und W/O-Emulsionen, Suspoemulsionen oder Suspensionskonzentrate unter anderem von agrochemischen, vorzugsweise herbiziden Wirkstoffen wie Biscarbamat-Herbiziden (z.B. Desmedipham und/oder Phenmedipham), und/oder Sulfonat-Herbiziden (z.B. Ethofumesat) und/oder Triazinonherbizide (z.B. Metamitron). Darüberhinaus kann das erfindungsgemäße Tensidsystem die pestizide Wirkung des/der eingearbeiteten agrochemischen Wirkstoffe in günstiger Weise beeinflussen.

Das erfindungsgemäße Tensid-/Lösungsmittelsystem gestattet auch die Herstellung von Formulierungen mit anderen als den oben aufgeführten Wirkstoffen, sofern sie hinsichtlich ihrer Löslichkeiten ähnliche Eigenschaften aufweisen. Beispielsweise eignen sich auch Herbizide aus der Gruppe der Phenoxyphenoxypropionate wie Diclofop-methyl, der Heteroaryloxyphenoxy-propionate wie Fenoxaprop-Ethyl oder Clodinafop-propargyl, der Triazinone wie Metamitron, der Sulfonylhamstoffe wie Triflusulfuron-methyl oder andere Wirkstoffe wie Prochloraz und/oder Insektizide wie Deltamethrin. Dies zeigt die Flexibilität des beschriebenen Tensid/Lösungsmittel-Systems auf. Die genannten Verbindungen sind dem Fachmann z.B. aus "The Pesticide Manual", British Crop Protection Council, 11. Ausgabe, 1997, bekannt.

Als weitere organische Lösungsmittel (c) eignen sich beispielsweise unpolare Lösungsmittel, polare protische oder aprotisch dipolare Lösungsmittel und deren Mischungen. Beispiele für weitere organische Lösungsmittel im Sinne der Erfindung sind
- aliphatische oder aromatische Kohlenwasserstoffe, wie z.B. Mineralöle, Paraffine oder Toluol, Xylole und Naphthalinderivate, insbesondere 1-Methylnaphthalin, 2-Methylnaphthalin, C₆-C₁₆-Aromatengemische wie z.B. die Solvesso®-Reihe (ESSO) mit den Typen Solvesso® 100 (Kp. 162-177 °C), Solvesso® 150 (Kp. 187-207 °C) und Solvesso® 200 (Kp. 219-282 °C) und 6-20C-Aliphaten, die linear oder cyclisch sein können, wie die Produkte der Shellsol®-Reihe, Typen T und K oder BP-n Paraffine,
- halogenierte aliphatische oder aromatische Kohlenwasserstoffe wie Methylenchlorid bzw. Chlorbenzol,
- Mono- und/oder polybasische Ester wie z.B. Triacetin (Essigsäuretriglycerid), Butyrolacton, Propylencarbonat, Triethylzitrat und Phthalsäure-(C₁-C₂₂)alkylester, speziell Phthalsäure(C₄-C₈)alkylester,
- Ether wie Diethylether, Tetrahydrofuran (THF), Dioxan, Alkylenglykolmonoalkylether und -dialkylether wie z.B. Propylenglykolmonomethylether, speziell Dowanol® PM (Propylenglykolmonomethylether), Propylen-glykolmonoethylether, Ethylenglykolmonomethylether oder - monoethylether, Diglyme und Tetraglyme,
- Amide wie Dimethylformamid (DMF), Dimethylacetamid, Dimethylcapryl/caprin-fettsäureamid und N-Alkylpyrrolidone,
- Ketone wie das wasserlösliche Aceton, aber auch mit Wasser nicht mischbare Ketone wie beispielsweise Cyclohexanon oder Isophoron,
- Nitrile wie Acetonitril, Propionitril, Butyronitril und Benzonitril,
- Sulfoxide und Sulfone wie Dimethylsulfoxid (DMSO) und Sulfolan sowie
- Öle im allgemeinen, z.B. auf pflanzlicher Basis wie Maiskeimöl und Rapsöl.

Bevorzugte weitere organische Lösungsmittel im Sinne der vorliegenden Erfindung sind insbesondere Amide wie Dimethylcapryl-/caprinfettsäureamid und N-Methylpyrrolidon oder aromatische Lösungsmittel wie die Solvesso®-Reihe von Exxon.

Die zur Herstellung der genannten Formulierungen verwendeten Hilfs- und Zusatzstoffe wie insbesondere Tenside und Lösungsmittel sind im Prinzip bekannt und werden beispielsweise in Standardwerken beschrieben: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C.Hauser-Verlag, München, 4.Auflage 1986.

Während die chemische Struktur der einzelnen einsetzbaren Komponenten in den genannten Standardwerken hinreichend beschrieben ist, sind Vorhersagen bezüglich der Eigenschaften von Mischungen derartiger Komponenten für die Formulierung von Wirkstoffen aus den genannten Standardwerken nicht ableitbar.

Überraschenderweise wurde nun gefunden, daß sich Kombinationen aus einem wasserunlöslichen oder bis maximal 10 g/l in Wasser löslichen Phosphorsäuretriester als Lösungsmittel und einem oder mehreren Tensiden auf nichtaromatischer Basis besonders gut zur Herstellung flüssiger Wirkstoff-Formulierungen wie stabiler Emulsionskonzentrate, Emulsionen, Suspoemulsionen oder Suspensionskonzentrate eignen, die ebenfalls Gegenstand der vorliegenden Erfindung sind.

Die erfindungsgemäßen Flüssigformulierungen lassen sich durch die üblichen bereits bekannten Verfahren herstellen, z.B. durch Vermischen der verschiedenen Komponenten mit Hilfe von Rühren, Schütteln oder (statischen) Mischern. Dabei ist gegebenenfalls kurzzeitig ein Erwärmen der Proben vorteilhaft, um ein vollständiges Auflösen aller involvierter Komponenten zu gewährleisten.

Ein Faktor für die Auswahl bevorzugter Tensidkomponenten ist deren Acidität bzw. Basizität pro Gewichts- bzw. Volumeneinheit, die z.B. durch die Säurezahl bzw. Aminzahl ausgedrückt wird. Bei der Auswahl weiterer Tensidkomponenten ist es vorteilhaft darauf zu achten, daß die Gesamt-Säurezahl bzw. Aminzahl nicht zu stark ansteigt. Vorzugsweise eignen sich daher neben nichtionogenen Tensiden z.B. saure oder basische Tensidkomponenten mit hinreichend kleiner Säure- bzw. Aminzahl oder nichtionogene Tensidkomponenten. Dementsprechend können als zusätzliche nichtionogene Tensidkomponenten z.B. mit 40 mol EO umgesetztes Rizinusöl oder auch mit 12 mol EO umgesetztes Rizinusöl, mit 15 mol EO umgesetzte Ölsäure und EO-PO-EO-Blockcopolymere eingesetzt werden.

In diesem Zusammenhang ist weiterhin darauf hinzuweisen, daß die erfindungsgemäßen Tensid/Lösungsmittel-Systeme die Herstellung stabiler Formulierungen mit in weiten Grenzen variabler Wirkstoffbeladung und Wirkstoffzusammensetzung ermöglichen. So kann die Wirkstoffbeladung z.B. zwischen 20 und 40, vorzugsweise zwischen 24 und 30 Gewichtsprozent variieren. Hinsichtlich der Wirkstoffzusammensetzung sind mit dieser Komponentenmischung neben stabilen "Ein-Wirkstoff"-Formulierungen auch solche mit zwei oder insbesondere drei Wirkstoffen zugänglich.

Die beschriebenen Tensid-/Lösungsmittelsysteme eignen sich vorzugsweise zur Herstellung von Formulierungen mit herbiziden Wirkstoffen wie Diclofop-methyl, Fenoxaprop-ethyl, Prochloraz, Metamitron und/oder Deltamethrin.

Bevorzugte Verhältnisse der Komponenten Phosphorsäureester (β):Tensid (α) sind je nach Wirkstoffbeladung und Wirkstoffzusammensetzung der Formulierungen insbesondere 100:1 bis 1:100, besonders bevorzugt 1:5 bis 1:20, beispielsweise ca. 1:8, 1:9 oder 1:10, oder 1:0,25 bis 1:0,9, beispielsweise 1,3:1, 1,4:1 oder 1,5:1.

Das erfindungsgemäße Tensid/Lösungsmittelsystem erlaubt die Herstellung verschiedener Flüssigskeitsformulierungen wie Öldispersionen, Suspoemulsionen, Emulsionen auf W/O- bzw. O/W-Basis und besonders von Emulsionskonzentraten und entsprechender davon abgeleiteter flüssiger Formulierungen wie wäßriger Spritzbrühen.

Emulsionskonzentrate, die entsprechend der vorliegenden Erfindung hergestellt werden, enthalten a priori kein zusätzliches Wasser, sondem nur das in den genannten kommerziell erhältlichen Tensiden bzw. Tensidmischungen, Polymeren und Lösungsmitteln vorhandene Restwasser. Aufgrund der in den erfindungsgemäßen Emulsionskonzentraten enthaltenen Tenside ist es jedoch möglich, diese bis hin zu einem kritischen Volumenbruch mit Wasser zu verdünnen, ohne daß es zu einer Eintrübung bzw. Instabilisierung der Formulierung kommt. Dabei entstehen formal zunächst W/O-Mikroemulsionen, die bei weiterer Erhöhung des Wasseranteiles in W/O-Emulsionen und schließlich - bei weiterer Verdünnung mit Wasser - O/W-Emulsionen übergehen. Die Erfindung umfaßt daher auch flüssige Formulierungen, die neben der erfindungsgemäßen Tensid-/Lösungsmittelmischung b) (zusätzliches) Wasser enthalten, z.B. Mikroemulsionen.

Mit Hilfe der Komponentenmischungen (b) lassen sich vorzugsweise flüssige Zubereitungen von Wirkstoffen, insbesondere herbizide Wirkstoffe wie Desmedipham und/oder Phenmedipham und/oder Ethofumesate herstellen, gekennzeichnet durch einen Gehalt an
a) 1 bis 50 Gew.-%, vorzugsweise 15 bis 35 Gew.-% agrochemischer Wirkstoffe,
b) 5 bis 80 Gew.-%, vorzugsweise 10 bis 70 Gew.-% des erfindungsgemäßen Tensid-/Lösungsmittelsystems (b),
c) 0 bis 40 Gew.-%, vorzugsweise 5 bis 35 Gew.-% weitere organische Lösungsmittel,
d) 0 bis 20 Gew.-%, vorzugsweise 0 bis 10 Gew.-% übliche Hilfs- und Zusatzstoffe wie Formulierungshilfsmittel und
e) 0 bis 96 Gew.-%, vorzugsweise 0 bis 90 Gew.-%, insbesondere 0 bis 10 Gew.-% Wasser.

Übliche Hilfs- und Zusatzstoffe wie Formulierungshilfsmittel d) sind beispielsweise Frostschutzmittel, Verdunstungshemmer, Konservierungsmittel, Riechstoffe und Farbstoffe. Bevorzugte Formulierungshilfsmittel d) sind Frostschutzmittel und Verdunstungshemmer wie Glycerin, z.B. in einer Menge von 2 bis 10 Gew.-% und Konservierungsstoffe, z.B. Mergal K9N® (Riedel) oder Cobate C®, in den üblichen Anwendungskonzentrationen für die jeweils eingesetzten Mittel.

Da wasserfreie Emulsionskonzentrate eine günstige Anwendungsform der Wirkstoffe, insbesondere herbiziden Wirkstoffe vom Typ (a) darstellen, sind ein besonders bevorzugter Gegenstand der Erfindung Emulsionskonzentrate mit einem Gehalt an
a) 10 bis 40 Gew.-% Wirkstoffe vom genannten Typ (a),
b) 10 bis 60 Gew.-% des erfindungsgemäßen Tensid-/Lösungsmittelsystems (b),
c) 5 bis 35 Gew.-% weitere organische Lösungsmittel und
d) 0 bis 10 Gew.-% übliche Hilfs- und Zusatzstoffe, z.B. Formulierungshilfsmittel.

Analog zu den wasserfreien Emulsionskonzentraten stellen auch die ebenso wasserfreien Suspensionskonzentrate auf Ölbasis einen bevorzugten Gegenstand dieser Erfindung dar, wobei diese Zubereitungen einen Gehalt an
a) 10 bis 40 Gew.-% Wirkstoffe vom genannten Typ (a),
b) 10 bis 60 Gew.-% des erfindungsgemäßen Tensid-/Lösungsmittelsystems (b),
c) 5 bis 35 Gew.-% weitere organische Lösungsmittel,
d) 0 bis 10 Gew.-% von (e) verschiedene übliche Hilfs- und Zusatzstoffe wie Formulierungshilfsmittel und
e) 0,001 bis 20 Gew.-% organische und/oder anorganische Verdickungsmittel aufweisen.

Außerdem lassen sich mit den erfindungsgemäßen Tensid-/Lösungsmittelsystemen auch Emulsionen herstellen. Daher sind ein weiterer besonders bevorzugter Gegenstand der Erfindung Emulsionen bzw. Mikroemulsionen mit einem Gehalt an
a) 10 bis 40 Gew.-% Wirkstoffe vom genannten Typ (a),
b) 10 bis 60 Gew.-% des erfindungsgemäßen Tensid-/Lösungsmittelsystems (b),
c) 5 bis 35 Gew.-% weitere organische Lösungsmittel,
d) 0 bis 10 Gew.-% übliche Hilfs- und Zusatzstoffe wie Formulierungshilfsmittel und
e) 0,001 bis 95 Gew.-% Wasser.

Auch die mit den beschriebenen Tensid-/Lösungsmittelsystemen herstellbaren Suspoemulsionen stellen einen bevorzugten Gegenstand der Erfindung dar. Diese weisen einen Gehalt an
a) 10 bis 40 Gew.-% Wirkstoffe vom genannten Typ (a),
b) 10 bis 60 Gew.-% des erfindungsgemäßen Tensid-/Lösungsmittelsystems (b),
c) 5 bis 35 Gew.-% weitere organische Lösungsmittel,
d) 0 bis 10 Gew.-% von (f) verschiedene übliche Hilfs- und Zusatzstoffe wie Formulierungshilfsmittel,
e) 0,001 bis 95 Gew.-% Wasser und
f) 0,001 bis 20 Gew.-% organische und/oder anorganische Verdickungsmittel auf.

Das erfindungsgemäße Tensid-/Lösungsmittelsystem (Komponentenmischung b)) ergibt bei Verdünnung mit Wasser Dispersionen von Ölphasen in Wasser bzw. - bei entsprechender Auswahl der Einzelkomponenten - von wäßrigen Phasen in ÖI. Je nach Zusammensetzung sind damit mit Wasser oder mit ÖI unter Erhalt der kolloidalen Struktur verdünnbare Dispersionen zugänglich. Daher sind die via Verdünnung aus den beschriebenen Konzentraten zugänglichen Dispersionen ein weiterer Gegenstand der Erfindung.

Das erfindungsgemäße Tensid/Lösungsmittelsystem eignet sich zur Herstellung stabiler flüssiger Formulierungen, insbesondere von Emulsionskonzentraten. Die mit dem erfindungsgemäßen Tensid/Lösungsmittel-System herstellbaren Formulierungen und Spritzbrühen weisen bei der Anwendung auch biologisch vorteilhafte Resultate auf. Dabei wird eine wirksame Menge der Formulierung bzw. Spritzbrühe, falls erforderlich nach verdünnen mit Wasser, auf die Pflanze, Pflanzenteile oder die Fläche auf der die Pflanzen wachsen, z.B. die Anbaufläche appliziert. Außerdem kann die biologische Aktivität der eingesetzten agrochemischen Wirkstoffe durch den Einsatz der erfindungsgemäßen Tensid/Lösungsmittel-Komponente b) in synergistischer Weise gesteigert werden.

### Beispiele

In den folgenden Beispielen beziehen sich Mengenangaben auf das Gewicht, sofern nichts anderes angegeben ist. Die Beispiele der Tabelle 1 betreffen nichterfindungsgemäße Beispiele (Vergleichsbeispiele), die Beispiele der Tabelle 2 sind erfindungsgemäß und beschreiben Emulsionskonzentrate (Beispiele I-VII), Emulsionen (Beispiele VIII und XI), Suspoemulsionen (Beispiel IX) und Suspensionskonzentrate (Beispiel X). Die Formulierungen wurden durch Vermischen der Komponenten mittels Rühren hergestellt.

**Tabelle 1:**

| Beispiele für Formulierungen, die keine stabilen Emulsionskonzentrate (EC) ergeben | | | | |
|---|---|---|---|---|
| | **1** | **2** | **3** | **4** |
| **Fenoxaprop-p-ethyl** | | 15 | | |
| **Endosulfan** | 40 | | | |
| **Deltamethrin** | | | | 5 |
| **Metamitron** | | | 1 | |
| **Rapsöl** | 27 | 40 | 57 | 30 |
| **Genapol X-060**^{**4)**} | 15 | 20 | 20 | 30 |
| **Emulsogen EL-400**^{**5)**} | 14 | 19 | 18 | 25 |
| **Phosfetal 201**^{**8)**} | 4 | 4 | 4 | 10 |
| **Servoxyl VPDZ 20/100**^{**7)**} | | 2 | | |

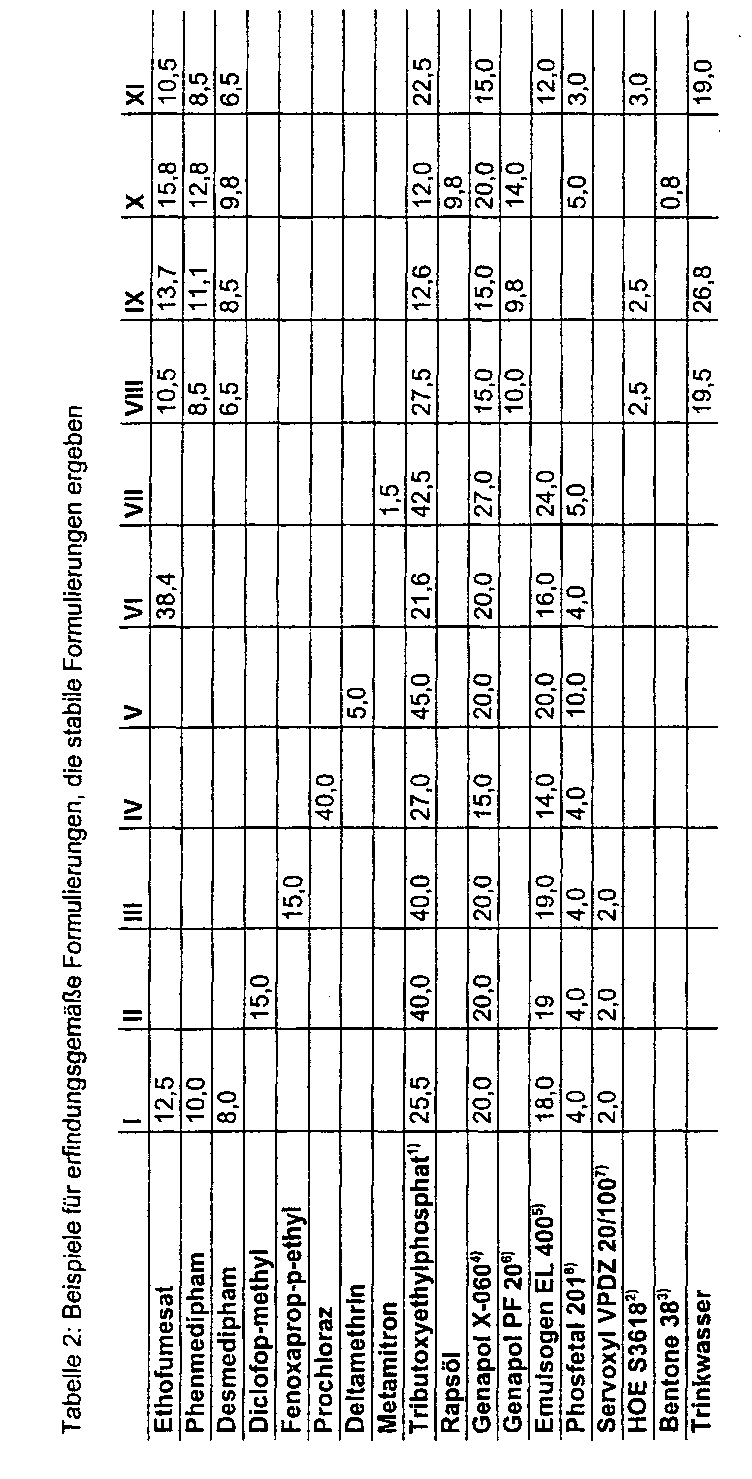

Erläuterungen zu Tabellen 1 und 2:
1) Tributoxyethylphosphat (speziell Hostaphat B310®, Clariant)
2) neutralisiertes, phosphatiertes Ethylenoxid-Propylenoxid-Ethylenoxid Blockcopolymer (speziell HOE®S3618, Clariant)
3) Kieselsäurederivat (speziell Bentone®38)
4) Ethoxylierter i-C₁₃-Fettalkohol (speziell Genapol X-060®, Clariant)
5) Ethoxyliertes Rizinusöl (speziell Emulsogen EL 400®, Clariant)
6) Ethylenoxid-Propylenoxid-Ethylenoxid-Blockcopolymer (speziell Genapol PF 20®, Clariant)
7) phosphatierter ethoxylierter lsotridecylalkohol (speziell Servoxyl VPDZ 20/100®, Condea)
8) phosphatierter ethoxylierter Fettalkohol (speziell Phosfetal 201®, Zschimmer&Schwarz)

## Patentansprüche

1. Flüssige Wirkstoff-Formulierung, enthaltend
(a) einen oder mehrere in Wasser unlösliche oder bis 10 g/l in Wasser lösliche Wirkstoffe, ausgewählt aus der Gruppe der Biscarbamat-Herbizide, Sulfonat-Herbizide, Triazinonherbizide, Phenoxyphenoxypropionate, Heteroaryloxyphenoxy-propionate und Sulfonylharnstoffe,
(b) ein Tensid/Lösungsmittel-System, enthaltend
α) ein oder mehrere Tenside auf nichtaromatischer Basis und
β) als Lösungsmittel einen oder mehrere wasserunlösliche oder bis 10 g/l in Wasser lösliche Triester der Phosphorsäure mit Alkoholen, vorzugsweise aus der Gruppe bestehend aus
1) einwertige Alkanole mit 5 bis 22 C-Atomen,
2) Diole oder Polyole,
3) Aryl-, Alkylaryl-, Poly(alkyl)aryl- und Poly(arylalkyl)arylalkohole,
4) alkoxylierte Alkohole, die durch Umsetzung der vorstehend unter 1), 2) oder 3) genannten Alkohole mit Alkylenoxiden erhalten werden, und
5) alkoxylierte Alkohole, die durch Umsetzung einwertiger Alkanole mit 1 bis 4 C-Atomen und Alkylenoxiden erhalten werden, und
worin keine Tenside auf Aromatenbasis enthalten sind.

2. Flüssige Wirkstoff-Formulierung nach Anspruch 1, welche als Komponente β) ein oder mehrere Verbindungen aus der Gruppe
- mit ortho-Phosphorsäure vollständig umgesetzte alkoxylierte kurzkettige Alkohole mit 1 bis 22 C-Atomen im Alkylrest und 1 bis 30 Alkylenenoxyeinheiten im Polyalkylenoxyteil,
- mit ortho-Phosphorsäure vollständig umgesetzte Alkylalkohole mit 5 bis 22 C-Atomen,
- mit ortho-Phosphorsäure teilweise umgesetzte, gegebenenfalls alkoxylierte Alkohole mit 1 bis 22 C-Atomen im Alkylrest und Phenolderivate, jeweils mit 0 bis 30 Alkylenoxy-einheiten im Polyalkylenoxyteil, wobei die verbleibenden OH-Valenzen der ortho-Phosphorsäure nachfolgend alkoxyliert wurden, und formal zweifach mit Alkoholen umgesetzte Ester der n-Octylphosphonsäure, enthält.

3. Flüssige Wirkstoff-Formulierung gemäß Anspruch 1 oder 2, zusätzlich enthaltend
(c) weitere organische Lösungsmittel,
(d) übliche Hilfs- und Zusatzstoffe wie weitere Tenside und/oder Polymere und/oder
(e) Wasser.

4. Flüssige Wirkstoff-Formulierung gemäß einem oder mehreren der Ansprüche 1 bis 3, enthaltend
a) 1 bis 50 Gew.-% agrochemischer Wirkstoffe,
b) 5 bis 80 Gew.-% des Tensid-/Lösungsmittelsystems wie in Anspruch 1 definiert,
c) 0 bis 40 Gew.-% weitere organische Lösungsmittel,
d) 0 bis 20 Gew.-% übliche von (f) verschiedene Hilfs- und Zusatzstoffe,
e) 0 bis 96 Gew.-% Wasser und
f) 0 bis 30 Gew.-% weitere Tenside.

5. Flüssige Wirkstoff-Formulierung gemäß einem oder mehreren der Ansprüche 1 bis 4, in Form eines Emulsionskonzentrats.

6. Emulsionskonzentrat gemäß Anspruch 5, enthaltend
a) 10 bis 40 Gew.-% agrochemischer Wirkstoffe,
b) 10 bis 60 Gew.-% des Tensid-/Lösungsmittelsystems wie in Anspruch 1 definiert,
c) 5 bis 35 Gew.-% weitere organische Lösungsmittel,
d) 0 bis 10 Gew.-% von (e) verschiedene übliche Hilfs- und Zusatzstoffe wie Formulierungshilfsmittel und
e) 10 bis 25 Gew.-% weitere Tenside.

7. Flüssige Wirkstoff-Formulierung gemäß einem oder mehreren der Ansprüche 1 bis 6, welche ein oder mehrere Wirkstoffe aus der Gruppe der Herbizide Desmedipham, Phenmedipham und Ethofumesat enthält.

8. Verfahren zur Herstellung einer Wirkstoff-Formulierung, gemäß einem oder mehreren der Ansprüche 1 bis 7, wobei man die Komponenten miteinander vermischt.

9. Verfahren zur Bekämpfung von unerwünschtem Pflanzenwuchs, wobei man eine wirksame Menge einer flüssigen Wirkstoff-Formulierung gemäß einem oder mehreren der Ansprüche 1 bis 7, auf die Pflanzen, Pflanzenteile oder Fläche auf der die Pflanzen wachsen appliziert.

10. Verwendung einer flüssigen Wirkstoff-Formulierung gemäß einem oder mehreren der Ansprüche 1 bis 7, zur Bekämpfung von unerwünschtem Pflanzenwuchs.

## Claims

1. A liquid active substance formulation comprising
a) one or more active substances which are insoluble in water or soluble in water up to a concentration to 10 g/l, selected from the group consisting of biscarbamate herbicides, sulfonate herbicides, triazinone herbicides, phenoxyphenoxypropionates, heteroaryloxyphenoxypropionates and sulfonylureas,
b) a surfactant/solvent system comprising
α) one or more nonaromatic-based surfactants,
β) as solvent, one or more triester(s) of phosphoric acid with alcohols, preferably from the group consisting of
1) monohydric alkanols having 5 to 22 carbon atoms,
2) diols or polyols,
3) aryl, alkylaryl, poly(alkyl)aryl and poly(arylalkyl)aryl alcohols,
4) alkoxylated alcohols obtained by reacting the alcohols mentioned above under 1), 2) or 3) with alkylene oxides, and
5) alkoxylated alcohols obtained by reacting monohydric alkanols having 1 to 4 carbon atoms and alkylene oxides, and
which does not comprise any aromatic-based surfactants.

2. A liquid active substance formulation as claimed in claim 1 which comprises, as component β), one or more compounds from the group of
- alkoxylated short-chain alcohols having 1-22 carbon atoms in the alkyl radical and 1 to 30 alkyleneoxy units in the polyalkyleneoxy moiety which have been reacted completely with ortho-phosphoric acid,
- alkyl alcohols having 5-22 carbon atoms which have been reacted completely with ortho-phosphoric acid,
- optionally alkoxylated alcohols having 1-22 carbon atoms in the alkyl radical and phenol derivatives, which have been partially reacted with ortho-phosphoric acid, in each case with 0 to 30 alkyleneoxy units in the polyalkyleneoxy moiety, the remaining OH valencies of the ortho-phosphoric acid subsequently having been alkoxylated, and esters of n-octylphosphonic acid which has formally been reacted twice with alcohols.

3. A liquid active substance formulation as claimed in claim 1, additionally comprising
(c) further organic solvents,
(d) further adjuvants and additives such as further surfactants and/or polymers, and/or
(e) water.

4. A liquid active substance formulation as claimed in claim 1 or 2, comprising
a) 1 to 50% by weight of agrochemical active substances,
b) 5 to 80% by weight of the surfactant/solvent system as defined in claim 1,
c) 0 to 40% by weight of further organic solvents,
d) 0 to 20% by weight of customary adjuvants and additives other than (f),
e) 0 to 96% by weight of water and
f) 0 to 30% by weight of further surfactants.

5. A liquid active substance formulation as claimed in one or more of claims 1 to 3 in the form of an emulsifiable concentrate.

6. An emulsifiable concentrate as claimed in claim 4, comprising
a) 10 to 40% by weight of agrochemical active substances,
b) 10 to 60% by weight of the surfactant/solvent system as defined in claim 1,
c) 5 to 35% by weight of further organic solvents,
d) 0 to 10% by weight of customary adjuvants and additives other than (e), such as formulation auxiliaries and
e) 10 to 25% by weight of further surfactants.

7. A liquid active substance formulation as claimed in one or more of claims 1 to 5, which comprises one or more active substances from the group of the herbicides desmedipham, phenmedipham and ethofumesate.

8. A process for the preparation of an active substance formulation as claimed in one or more of claims 1 to 6, wherein the components are mixed with each other.

9. A method of controlling undesired vegetation, wherein an effective amount of a liquid active substance formulation as claimed in one or more of claims 1 to 6 is applied to the plants, plant parts or area on which the plants grow.

10. The use of a liquid active substance formulation as claimed in one or more of claims 1 to 6 for controlling undesired vegetation.

## Revendications

1. Formulation liquide, de matières actives renfermant
(a) une ou plusieurs matières actives insolubles dans l'eau ou hydrosolubles jusqu'à 10 g/l, prises dans le groupe comprenant des herbicides de type biscarbamate, des herbicides de type sulfonate, des herbicides de type triazinone, des phénoxy-phénoxypropionates, des hétéroaryloxyphénoxy-propionates et des sulfonylurées,
(b) un système d'agent de surface/solvant renfermant
α) un ou plusieurs agents de surface à base non aromatique et
β) en tant que solvant un ou plusieurs triesters de l'acide phosphorique insolubles dans l'eau ou hydrosolubles jusqu'à 10 g/l avec des alcools, qui sont de préférence pris dans le groupe comprenant
1) des alcanols monovalents présentant 5 à 22 atomes de carbone
2) des diols ou polyols,
3) des alcools d'aryles, d'alkylaryles, de poly(alkyl)-aryles et de poly-(arylalkyl)-aryles,
4) des alcools alkoxylés, que l'on obtient par réaction des alcools précités aux points 1), 2) ou 3) sur des oxydes d'alkylènes, et
5) des alcools alkoxylés, que l'on obtient par réaction d'alcanols monovalents présentant 1 à 4 atomes de carbone et des oxydes d'alkylènes, et
qui ne renferment pas d'agents de surface à base d'aromatiques.

2. Formulation liquide de matières actives selon la revendication 1, qui comprend en tant que constituant β) un ou plusieurs composés pris dans le groupe
- des alcools alkoxylés à chaîne courte présentant 1 à 22 atomes de carbone dans le reste alkyle et 1 à 30 unités oxyde d'alkylène dans le fragment polyoxyalkylène complètement transformés par l'acide ortho-phosphorique,
- des alcools alkyliques présentant 5 à 22 atomes de carbone complètement transformés par l'acide ortho-phosphorique,
- des alcools éventuellement alkoxylés présentant 1 à 22 atomes de carbone dans le fragment alkyle partiellement transformés par l'acide ortho-phosphorique, et des dérivés phénoliques, chacun présentant de 0 à 30 unités oxyde d'alkylène dans le fragment polyoxyalkylène, les valences OH de l'acide ortho-phosphorique n'ayant pas réagi sont ensuite alkoxylées, et des esters de l'acide n-octylphosphorique transformés selon la formule deux fois par des alcools.

3. Formulation liquide de matières actives selon la revendication 1, qui comprend de plus
(c) d'autres solvants organiques
(d) d'autres adjuvants et de matières d'addition tels que d'autres agents de surface et/ou polymères et/ou
(e) eau.

4. Formulation liquide de matières actives selon la revendication 1 ou 2, qui comprend
a) de 1 à 50 % en masse de matières actives agrochimiques,
b) de 5 à 80 % en masse du système d'agent de surface/solvant comme défini à la revendication 1,
c) de 0 à 40 % en masse d'autres solvants organiques,
d) de 0 à 20 % en masse d'adjuvants et de matières d'addition usuelles différentes de (f),
e) de 0 à 96 % en masse d'eau et
f) de 0 à 30 % en masse d'autres agents de surface.

5. Formulation liquide de matières actives selon une ou plusieurs des revendications 1 à 3, sous forme d'un concentré émulsionnable.

6. Concentré émulsionnable selon la revendication 4, renfermant
a) de 10 à 40 % en masse de matières actives agrochimiques,
b) de 10 à 60 % en masse du système d'agent de surface/solvant comme défini à la revendication 1,
c) de 5 à 35 % en masse d'autres solvants organiques,
d) de 0 à 10 % en masse d'adjuvants et de matières d'addition usuelles différentes de (e) en tant qu'adjuvants de formulation, et
e) de 10 à 25 % en masse d'autres agents de surface.

7. Formulation liquide de matières actives selon une ou plusieurs des revendications 1 à 5, renfermant une ou plusieurs matières actives prises dans le groupe comprenant les herbicides desmédipham, phénmedipham et éthofumesate.

8. Procédé pour la préparation d'une formulation de matières actives selon une ou plusieurs des revendications 1 à 6, par mélange des composants.

9. Procédé pour la lutte contre la végétation indésirable, en appliquant une quantité efficace d'une formulation liquide de matières actives selon une ou plusieurs des revendications 1 à 6, aux plantes, aux parties de plantes ou à la surface de leur croissance.

10. Utilisation d'une formulation liquide de matières actives selon une ou plusieurs des revendications 1 à 6, pour la lutte contre une végétation indésirable.
